# EUROPEAN PATENT SPECIFICATION

(11) **EP 4 452 611 B1**
(45) Date of publication and mention of the grant of the patent: **19.11.2025**
(21) Application number: 22838954.0
(22) Date of filing: 13.12.2022
(51) Int. Cl.: B29D 30/08, B29D 30/24

(54) **PROCESS, SERVICE DRUM AND PLANT FOR BUILDING TYRES FOR VEHICLES**
VERFAHREN, WARTUNGSTROMMEL UND ANLAGE ZUR HERSTELLUNG VON REIFEN FÜR FAHRZEUGE
PROCÉDÉ, TAMBOUR DE SERVICE ET INSTALLATION POUR CONSTRUIRE DES PNEUS POUR VÉHICULES

(30) Priority: 21.12.2021 IT 202100031898
(43) Date of publication of application: 30.10.2024
(73) Proprietor: Pirelli Tyre S.p.A., 20126 Milano (IT)
(72) Inventor: BOIOCCHI, Maurizio, 20126 Milano (IT); BADOLATO, Luigi Antonio, 20126 Milano (IT); SABBATANI, Enrico, 20126 Milano (IT)
(74) Representative: Tansini, Elio Fabrizio
(86) International application number: PCT/IB2022/062124
(87) International publication number: WO 2023/119059

(56) References cited:
- WO-A1-2009/128046
- WO-A1-2014/083477
- WO-A1-2018/109599

## Description

The present invention relates to a process for building tyres for vehicle wheels. The invention also relates to a plant usable for building tyres in accordance with the aforesaid process, and a service drum usable in said plant.

In particular, the invention is particularly intended for manufacturing ultra-high performance tyres, in particular for race car competitions.

A tyre for vehicle wheels generally comprises a carcass structure comprising at least one carcass ply having respectively opposite terminal flaps engaged with respective anchoring annular structures, integrated in the zones normally identified with the name of "beads", defining the radially inner circumferential edges of the tyre.

The carcass structure is associated with a crown structure. By "crown structure" of a tyre it is intended at least one belt structure having one or more belt layers, situated in radial superimposition with respect to each other and with respect to the carcass ply, having textile or metallic reinforcement cords with cross orientation and/or substantially parallel to the circumferential extension direction of the tyre. More preferably, the crown structure comprises a belt structure having at least one belt layer and a tread band made of elastomeric material applied in radially outer position to the crown structure.

Respective sidewalls made of elastomeric material are also applied in axially outer position on the lateral surfaces of the carcass structure, each extended from one of the lateral edges of the tread band up to the respective anchoring annular structure. In the tyres of "tubeless" type, an air impermeable cover layer, usually termed "liner", covers the inner surfaces of the tyre.

The terms "radials" and "axial" and the expressions "radially inner/outer" and "axially inner/outer" are used with reference to the radial direction of the service drum used and/or of an annular tyre component being processed (i.e. to a direction perpendicular to a central geometric axis with respect to said service drum and/or annular component) and to the axial direction of the service drum used and/or of the annular tyre component (i.e. to a direction parallel to said central axis). The terms "circumferential" and "circumferentially" are instead used with reference to the annular extension of the aforesaid service drum and/or of the annular component.

WO 2018/109599 A1, in the name of the same Applicant, discloses a process wherein in a shaping station, a toroidal forming drum is positioned within a carcass sleeve comprising at least one carcass ply associated with a pair of beads in radially inner position. The carcass sleeve is toroidally shaped by radial expansion of the forming drum. The forming drum carrying the shaped carcass sleeve is removed from the shaping station, and tyre components are applied externally on the shaped carcass sleeve, carried by the forming drum.

In the document WO 2012/146988, the Applicant describes the possibility to manufacture the crown structure by a process in which, on a so-called auxiliary drum, an annular assembly is formed comprising a first radially inner belt layer and at least one second radially outer belt layer. Axially opposite terminal portions of the first belt layer are then turned over on said at least one second belt layer, so as to at least partially superimpose the terminal portions of the first belt layer on said at least one second radially outer belt layer.

The belt layers are then transferred on a service drum comprising radially movable sectors, which is adapted to be radially expanded so as to engage the belt structure. The service drum, in the radial expansion condition, can have an outer surface shaped according to curvilinear cross section profile, so as to impart a desired shape to the belt layers engaged thereon.

A second part of the belt structure is made on the service drum by circumferentially winding, according to axially approached coils, at least one reinforcement element made of elastomeric material longitudinally incorporated one or more continuous cords, so as to form an additional belt layer, usually termed "zero degree layer" in accordance with the orientation of the reinforcement cords with respect to a circumferential direction, useful for the purposes of maintaining the desired cross section profile of the belt structure, even under the effects of the high centrifugal forces triggered during use.

Then, the deposition of a continuous elongated element made of elastomeric material is actuated, according to coils that are mutually approached around the belt structure carried by the service drum, in order to form a tread band having desired shape and thickness.

The Applicant has observed that the expansion action exerted by the service drum on the belt layers, also termed "shaping" herein, is useful for conferring to the belt structure a suitably curved cross section profile, which matches or approaches the desired profile that the belt structure must take on within a mould employed in a subsequent tyre vulcanisation treatment, so as to limit the uncontrolled deformations thereof and be able to manage the selection of the characteristics of the materials that constitute the tyre, with positive effects on the management of the impression area and hence of the tyre response.

The Applicant has however observed that the shaping of the belt structure actuated according to the prior art encounters several difficulties that are particularly evident in the building of tyres for ultra-high performance sport uses.

In such tyres, especially if intended for race car competitions that involve extreme work conditions, it may be requested that the belt layer or layers be made starting from manufactured products in strip form, with reinforcement cords of textile and/or metallic type having high tensile strength and hence low extensibility. It may also be requested that the axially opposite lateral edges of at least one of the belt layers are turned over to at least partially cover the radially more external belt layer, for example to impart greater responsiveness and response speed of the tyre on getting over a curve or for other performance purposes.

Such above-described structural schemes with reference to tyres for race car competitions contribute to increasing the rigidity of the belt structure in its entirety, preventing the deformability thereof for the purpose of shaping. These difficulties are further accentuated by the use of reinforcement cords formed by or typically containing aramid fibres and/or other non-extensible materials.

The significant increase of the structural non-extensibility of the belt also opposes the expansion of the sectors of the service drum, with the risk of inducing excessive stresses on the structural components of the service drum and/or on the same components of the belt structure.

The Applicant has also observed that the radial progressive expansion of the sectors of the service drum causes, in addition to a corresponding radial expansion of the belt structure, a circumferential dilation thereof. This phenomenon typically starts in proximity to the axial middle line plane of the belt structure, where there is the initial contact with the sectors, before then being progressively extended towards the axially outer edges. The reinforcement cords which compose the belt layers tend to facilitate this radial and circumferential dilation by progressively changing their orientation with respect to the circumferential direction, causing a narrowing of the overall width of the belt structure.

The Applicant has also observed that at the end of the shaping of the belt layers, the belt structure has a non-constant expansion degree along the radial section. Such expansion degree indeed varies between a maximum expansion degree in proximity to an axial middle line plane, and a minimum expansion degree in proximity to the axially outer edges. Due to the abovementioned expansion difficulties, the minimum expansion might be zero or in any case insufficient.

The Applicant has perceived that the above-described dynamics impart relative sliding between the radially inner surface of the belt layers and the sectors.

The Applicant has found that a reduction of the friction that is developed between the surfaces of the sectors in contact with the radially inner surface of the belt structure during shaping can significantly reduce the stresses transmitted between the belt structure and the components of the shaping drum, facilitating the radial expansion of the belt itself.

The aforesaid reduction of the friction can be obtained by interposing, between the sectors and the radially inner surface of the belt layers, at least one sliding interface generating insert, which can be moved both in relation to the belt structure, and in relation to the sectors. More particularly, being moved with respect to the sectors and the inner surface of the belt layers, the insert generating such sliding interface allows eliminating or significantly reducing the friction produced by the relative movements between the parts, so as to significantly facilitate an optimal execution of the shaping even when the belt structure being processed has a high deformation resistance.

In a first aspect, the present invention relates to a process for building tyres for vehicles.

Preferably, provision is made for manufacturing a carcass structure comprising at least one carcass ply having terminal flaps engaged with respective anchoring annular structures.

Preferably, provision is made for manufacturing a crown structure.

Preferably, provision is made for coupling the crown structure in radially outer position to the carcass structure.

Preferably, manufacturing the crown structure comprises arranging in sequence one or more belt layers around an auxiliary drum.

Preferably, provision is made for arranging a service drum comprising sectors circumferentially distributed around a central geometric axis and radially movable between a radially contracted condition in which they are approached to the central geometric axis and a radially expanded condition in which the sectors are moved away from the central geometric axis.

Preferably, each sector has a radially outer surface having a curved profile in a radial plane with respect to the central geometric axis.

Preferably, provision is made for removing the belt layers from the auxiliary drum and transferring them coaxially around the service drum arranged in the contracted condition.

Preferably, provision is made for expanding the sectors of the service drum from the contracted condition to the expanded condition, in order to shape said belt layers according to a curved cross section profile in accordance with the radially outer surfaces of the sectors.

Preferably, between the sectors and a radially inner surface of the belt layers, at least one sliding interface generating insert is interposed which, during the expansion of the sectors, is moved with respect to the sectors and against said radially inner surface in order to facilitate a circumferential sliding of the belt layers with respect to the sectors.

In a second aspect, the invention relates to a service drum for manufacturing tyres of vehicles.

Preferably, provision is made for a plurality of sectors circumferentially distributed around a central geometric axis and radially movable between a radially contracted condition in which they are approached to the central geometric axis and a radially expanded condition in which the sectors are moved away from the central geometric axis.

Preferably, each sector has a radially outer surface having a curved profile in a radial plane with respect to the central geometric axis.

Preferably, the service drum also comprises at least one sliding interface generating insert, movable with respect to the radially outer surface of the sectors and configured for operating in contact relationship against a radially inner surface of one or more belt layers applicable around said service drum, in order to facilitate a circumferential sliding of the belt layers with respect to the sectors.

A further aspect of the invention proposes a plant for manufacturing tyres of vehicles.

Preferably, provision is made for a carcass building area for manufacturing carcass structures.

Preferably, provision is made for a crown building area for manufacturing crown structures.

Preferably, provision is made for an assembly station in which each carcass structure is associated with one of said crown structures.

Preferably, the crown building area comprises an auxiliary drum. Preferably, provision is made for at least one feed group configured for arranging in sequence one or more belt layers around the auxiliary drum.

Preferably, provision is made for a service drum in accordance with the second aspect of the invention.

Preferably, provision is made for a transfer device configured for removing the belt layers from the auxiliary drum and transferring them coaxially around the service drum arranged in the contracted condition.

The Applicant deems that the presence of said insert eliminates or significantly reduces the friction forces developed between the radially inner surface of the belt layers and the outer surfaces of the sectors, without having to recur to the use of lubricant layers in fluid or pulverulent form, which could undesirably migrate towards the belt layers, unacceptably altering the properties of the materials. The elimination of said friction forces significantly facilitates the expansion of the sectors, promoting an optimal execution of the shaping of the belt layers, even when one or more of these include reinforcement cords made of poorly extensible material, and/or have turned over terminal flaps.

In at least one of the aforesaid aspects, convenient embodiments of the invention can comprise one or more of the following preferred characteristics.

Preferably, forming the crown structure comprises:
applying a first belt layer around an outer surface of the auxiliary drum;
applying, around the first belt layer, a second belt layer having width smaller than that of the first belt layer;
turning up terminal flaps of the first belt layer, around respective lateral edges of the second belt layer, superimposed on the latter.

According to the Applicant, the turning up of the terminal flaps improves the performance characteristics of the tyre.

Preferably, the turning up of said terminal flaps is executed before transferring the belt layers onto the service drum.

It is therefore possible to balance the processing times on the service drum with those required for executing other operations upstream and/or downstream thereof.

Preferably, in the radially contracted condition, the sectors define an external diameter of the service drum having size smaller than that of an internal diameter of said at least one belt layer as previously formed on the auxiliary drum.

Preferably, an external diameter of the service drum defined by the sectors in the radially expanded condition has size greater than that of an internal diameter of said at least one belt layer as previously formed on the auxiliary drum.

Preferably, the movement of the sectors towards the radially expanded condition determines a circumferential dilation of an elastic sleeve constituting said sliding interface generating insert. Preferably, the movement of the sectors towards the radially expanded condition determines a reduction of the axial size of the elastic sleeve constituting said sliding interface generating insert.

Preferably, the movement of the sectors towards the radially expanded condition determines a rolling of rolling bodies constituting said sliding interface generating insert.

Preferably, provision is also made for the action of forming at least one additional enclosing layer by winding one or more reinforcement cords according to axially side-by-side coils around the belt layers carried by the service drum in the expanded condition.

Preferably, the formation of the additional enclosing belt is executed after the expansion of the sectors of the service drum.

Preferably, provision is also made for forming a tread band around the belt layers carried by the service drum in the expanded condition.

Preferably, the sliding interface generating insert comprises an elastic sleeve arranged around the sectors.

The use of an elastically deformable elastic sleeve allows facilitating the expansion of the sectors. In addition, the elastic sleeve tends to be axially narrowed during the circumferential expansion set by the sectors, minimising the relative sliding induced by the axial contraction of the belt layers.

Preferably, the elastic sleeve is mounted around the sectors in elastic dilation condition.

Hence a coherence is facilitated between the diameter dimensions of the elastic sleeve and those of the service drum, in the transitions between the contracted condition and the expanded condition of the sectors.

Preferably, the movement of the sectors towards the radially expanded condition determines a circumferential dilation of the elastic sleeve.

Preferably, the movement of the sectors towards the radially expanded condition determines a reduction of the axial size of the elastic sleeve.

Thus, an axial contraction of the belt layers during shaping is at least partially facilitated.

Preferably, the elastic sleeve is axially contained in a centring recess made on each of said sectors.

Thus the stability and repeatability of the axial positioning of the elastic sleeve is facilitated simultaneously with the return of the sectors into contracted condition.

Preferably, the centring recess has two axial shoulders directed towards axially outer edges of the elastic sleeve.

Preferably, said axial shoulders have height not greater than a thickness of the elastic sleeve.

Preferably, said axial shoulders have height corresponding to a thickness of the elastic sleeve.

Thus, a satisfactory surface continuity is facilitated between the elastic sleeve and the portions of the sectors that are axially outer with respect to the elastic sleeve itself.

Preferably, said axial shoulders have height lower than a thickness of the elastic sleeve when in the contracted condition.

The lower height of the axial shoulders compensates for reductions of thickness sustained by the elastic sleeve following the diameter dilation, promoting a satisfactory surface continuity in the expanded condition.

Preferably, the elastic sleeve has an axial extension smaller than an axial extension of the radially inner surface of the belt layers. The axially outer zones of the belt layers, which tend to be more resistant to deformations due to the presence of the turn-ups, thus act in abutment directly against the rigid surfaces of the sectors. Hence one limits the risk of imposing excessive crushing or cutting stresses on the elastic sleeve, upon action of the axially outer edges of the belt layers, during the expansion of the sectors.

Preferably, the elastic sleeve has an axial extension greater than or equal to an axial extension of the radially inner surface of the belt layers.

Thus, a greater surface continuity is obtained, reducing the risk of causing impressions and defects on the radially inner surface of the belt layers.

Preferably, the elastic sleeve is made of elastomeric material, more preferably of polychloroprene.

Preferably, the elastic sleeve has an antifriction coating layer, more preferably a "Milliken" layer.

Preferably, the radially outer surface of the sectors has an antifriction treatment, more preferably by "PlasmaCoat 25301/2008F".

Preferably, the sliding interface generating insert comprises a plurality of rolling bodies rotatably engaged with each sector and projecting from the radially outer surface thereof.

The use in an insert generating a coupling composed of rigid bodies facilitates greater process repeatability, and limits the effects of wear and aging, promoting greater reliability over time.

Preferably, the rolling bodies comprise spheres.

Preferably, each of said spheres is rotatably housed in a respective slot arranged in the respective sector.

The rolling freedom of the spheres facilitates the relative sliding between the belt layers and the sectors of the drum, both in axial direction and in circumferential direction.

Preferably, each of said spheres is rotatably housed in a respective bushing arranged in a slot made in the respective sector.

Preferably, at least one closure plate fixed to each sector retains the spheres in the respective slots and at least partially defines the radially outer surface of the sector.

Preferably, each sphere projects from the outer surface of the respective sector according to a size smaller than the diameter thereof.

Preferably, each sphere projects from the outer surface of the respective sector according to a size comprised between about 0.5 mm and about 3.5 mm, e.g. about 1 mm.

Preferably, each of said spheres has a diameter comprised between about 5 mm and about 20 mm, e.g. about 12 mm.

The lower limit reduces the risk of incurring phenomena of wedging of the spheres in the belt layer, in particular between the contiguous cords. The upper limit allows housing a suitable number of spheres without having to increase the dimensions of the sectors.

Preferably, the spheres on each sector are mutually spaced according to a size comprised between about 6 mm and about 60 mm, e.g. about 25 mm.

Preferably, each of said spheres projects from the radially outer surface of the respective sector according to a size smaller than the diameter thereof, and is free to rotate around the centre thereof according to any axis passing through the centre itself.

The rotation freedom of the spheres allows facilitating sliding both in circumferential direction and in axial direction of the belt layers with respect to the sectors.

Preferably, the rolling bodies comprise rollers.

Preferably, each of said rollers is rotatably engaged in a housing made in the radially outer surface of the respective sector.

Preferably, each of said rollers is rotatable around a rotation axis substantially parallel to a circumferential extension direction of the service drum.

The rollers are thus adapted to facilitate relative axial sliding between the belt layers and the radially outer surfaces of the sectors, facilitating an axial narrowing of the layers following their circumferential expansion.

Preferably, each of said rollers has a diameter comprised between about 5 mm and about 25 mm, e.g. about 16 mm.

Preferably, the rollers on each sector are mutually spaced according to a size comprised between about 6 mm and about 60 mm, e.g. about 19 mm.

Preferably, turning up devices are also provided for turning up terminal flaps of the first belt layer, around respective lateral edges of the second belt layer, superimposed on the latter.

Preferably, the turning up devices operate at the auxiliary drum.

Preferably, the transfer device comprises grip elements that are circumferentially distributed and radially movable with respect to the central geometric axis.

Preferably, the auxiliary drum has an outer cylindrical shaping surface.

Further characteristics and advantages will be clearer from the detailed description of a preferred but not exclusive embodiment of a process, a plant and a service drum for building tyres for vehicle wheels, in accordance with the present invention.

Such description will be set forth hereinbelow with reference to the enclosed drawings, provided only for exemplifying and hence non-limiting purposes, in which:
- figure 1 schematically shows, in plan view, a plant for manufacturing tyres in accordance with the present invention;
- figure 2 shows, in perspective view, a service drum in accordance with one embodiment of the invention;
- figure 3 schematically shows one of the sectors of the drum of figure 2 in diameter section, with the sectors in contracted condition;
- figure 4 shows the sector of figure 3 in expanded condition during the shaping of the belt layers;
- figure 5 shows, in perspective view, a further embodiment of the service drum according to the invention, in expanded condition;
- figure 6 shows, in partial section, an enlarged detail of figure 5;
- figure 7 shows, in perspective view, a radially outer portion of a sector of the service drum in accordance with a further embodiment of the invention;
- figure 8 schematically shows, in radial half-section, a tyre attainable in accordance with the present invention.

With reference to the abovementioned figures, reference number 1 overall indicates a plant for manufacturing tyres for vehicle wheels, arranged to actuate a process according to the present invention.

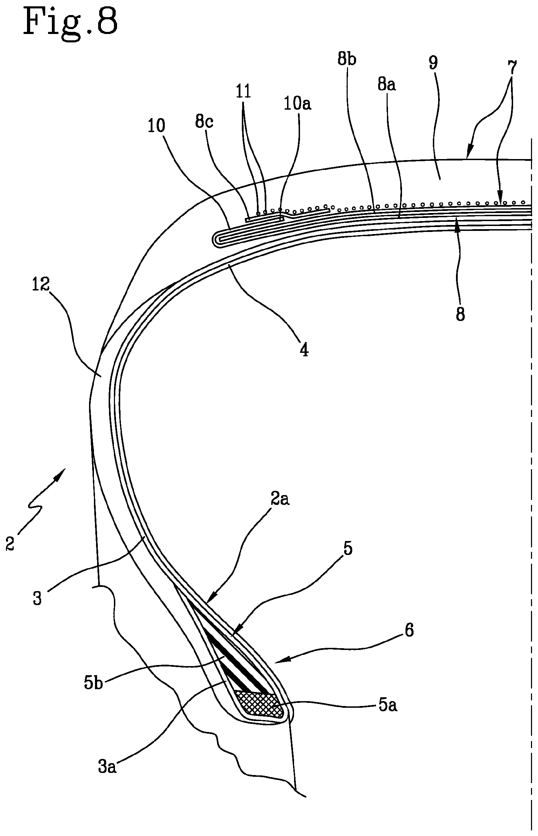

The plant 1 is set for manufacturing tyres 2 (figure 8) essentially comprising a carcass structure 2a having at least one or more carcass plies 3.

A layer of impermeable elastomeric material or so-called liner 4 can be applied inside the carcass ply 3. Two anchoring annular structures 5, each comprising a so-called bead core 5a carrying an elastomeric filler 5b in radially outer position, are engaged with respective terminal flaps 3a of the carcass ply 3. The anchoring annular structures 5 are integrated in proximity to zones normally identified with the name "beads" 6, at which there is normally the engagement of the tyre 2 with a respective mounting rim.

A crown structure 7 is circumferentially applied around the carcass structure 2a. The crown structure 7 comprises a belt structure 8 having one or more belt layers 8a, 8b, and preferably a tread band 9 circumferentially superimposed on the belt structure 8.

More particularly, in the illustrated example, a first belt layer 8a, radially inner, and at least one second belt layer 8b, radially outer, are provided for.

At least one belt layer, in the illustrated example the first belt layer 8a, has axially opposite terminal flaps 10 turned-over in radially outer position on the second belt layer 8b, radially more external. In the absence of the radially outer belt layer or layers 8b, the terminal flaps 10 of the first belt layer 8a can be turned over on the same first belt layer.

The belt structure 8 can also comprise a pair of belt-like reinforcement inserts 8c, each radially superimposed on a terminal edge 10a of one of the turned-over terminal flaps 10.

At least one additional reinforcement layer 11, of so-called "zero degree layer" type, can also be radially superimposed on the belt layers 8a, 8b and on the possible belt-like reinforcement inserts 8c, in order to confer a desired resistance to circumferential and radial extensibility to the belt structure 8.

Two sidewalls 12, each extended from the corresponding bead 6 to a corresponding lateral edge of the tread band 9, are applied in laterally opposite positions on the carcass ply 3.

The plant 1 preferably has a carcass building area 13, there the carcass structures 2a of the tyres being processed are formed.

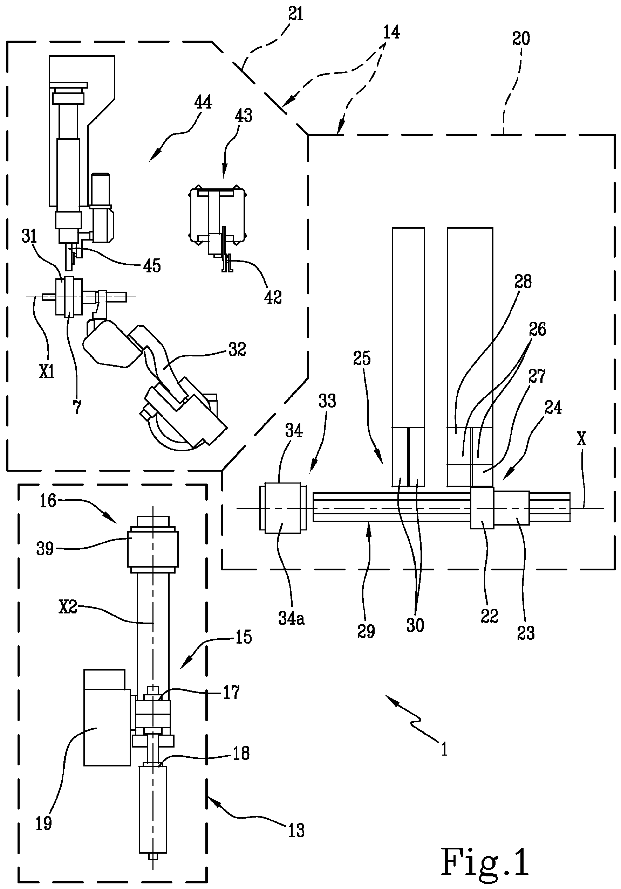

The crown structures 7 are built in a crown building area, overall indicated with 14 in figure 1.

In an assembly station 15, the coupling of each carcass structure 2a to a respective crown structure 7 is actuated.

More particularly, in the illustrated example the assembly station 15 is operatively integrated in the carcass building area 13.

Alternatively, according to a non-illustrated embodiment, the assembly station 15 is situated outside the crown building area 14 and outside the carcass building area 13 and is operatively associated therewith.

According to an embodiment illustrated in figure 1, the carcass building area 13 comprises at least one primary drum 17, on which the carcass structure 2a of the tyre 2 is built. The primary drum 17 can be operatively supported by a mandrel 18 or another device that if necessary allows actuating it in rotation and/or suitably moving it between one or more work units 19 during the application of the components of the carcass structure 2a.

In the crown building area 14, the following are preferably identifiable: at least one first work zone 20 and at least one second work zone 21. At the first work zone 20, belt structure formation devices 26 operate, for building a belt structure 8 or at least a first part thereof, on at least one auxiliary drum 22.

The auxiliary drum 22 can be rotatably supported by a carriage 23 preferably movable parallel to a geometric rotation axis X of the auxiliary drum itself, in order to selectively position the latter in front of at least one first work station 24 and one second work station 25, respectively spaced.

The belt structure formation devices 26 preferably comprise members in order to form at least the first belt layer 8a, e.g. by a first feed group 27 operating at the first work station 24, in order to dispense at least one first manufactured item in strip form made of cut-to-size elastomeric material, comprising cords for example of textile type, parallel and approached to each other and oriented according to a predetermined angle, preferably comprised between about 30° and about 60°, with respect to the longitudinal extension of the manufactured item itself. The first manufactured item dispensed by the first feed group 27 is applied around the auxiliary drum 22, actuated in rotation so as to form the first belt layer 8a, applying it for a complete revolution around an outer surface of the auxiliary drum 22 itself, having cylindrical shaping. At the end of the winding, the ends of the first belt layer 8a thus formed are mutually joined head-head.

A second feed group 28 can also be provided for dispensing a second manufactured item in strip form made of cut-to-size elastomeric material, preferably having width smaller than that of the first manufactured item. The second manufactured item can comprise parallel textile or metallic cords that are approached to each other and oriented according to a predetermined angle, preferably comprised between about 30° and about 60°, with respect to the longitudinal extension of the manufactured item itself, and having cross orientation with respect to the cords of the first manufactured item.

The second manufactured item is preferably applied around the first belt layer 8a in a manner analogous to the latter, so as to form the second belt layer 8b wound for a complete revolution around the auxiliary drum 22. At the end of the winding, the ends of the second belt layer 8b thus formed, having preferably width smaller than that of the first belt layer 8a, are mutually joined head-head.

Once the deposition of the belt layers 8a, 8b has completed, the axially opposite terminal flaps 10 of said at least one first belt layer 8a, axially projecting with respect to the second belt layer 8b, are turned over around the terminal edges of the latter so as to be radially superimposed outside the second belt layer itself. Such operation can be executed possibly upon movement of the carriage 23 carrying the auxiliary drum 22 in proximity to a turning up station 29 where, due to suitable turning up devices not described nor illustrated in detail since attainable in a per se known manner, e.g. with the aid of inflatable chambers and/or suitably deformable chambers and/or with mechanical thrust elements, partially or totally integrated in the same auxiliary drum 22.

In the first work area 20, for example at aforesaid second work station 25, a third feed group 30 can also be operatively arranged for the application of the pair of belt-like reinforcement inserts 8c, each attained in strip form and made of elastomeric material incorporating cords, preferably textile, e.g. with nylon base, which are longitudinally extended.

Once the processing in the first work area 20 has been completed, the building of the crown structure 7 continues in the second work area 21, operated by at least one service drum 31, preferably engaged with a robotic arm 32, preferably of anthropomorphic type.

For such purpose, the auxiliary drum 22 is preferably carried, for example by an axial movement of the carriage 23, into a first transfer station 33 where a transfer device group 34 operates which is configured for transferring the belt structure 8 from the auxiliary drum 22 to the service drum 31.

In a preferred embodiment, such transfer device group 34 comprises at least one first transfer member 34a substantially fixed in said crown building area 14, and configured for being alternatively engaged by the auxiliary drum 22 carried by the carriage 23, and by the service drum 31 carried by the robotic arm 32.

Once inserted in the first transfer member 34a, the auxiliary drum 22, composed of radially movable sectors (not illustrated), is radially contracted so as to disengage the belt structure 8 which remains retained by the first transfer member 34a itself, for such purpose equipped with grip elements (not illustrated) that are circumferentially distributed and radially movable in order to be carried into contact with the belt structure 8.

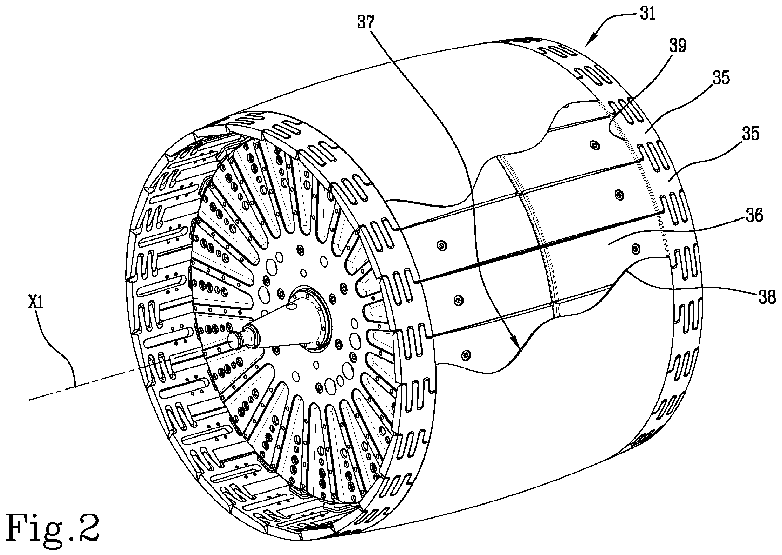

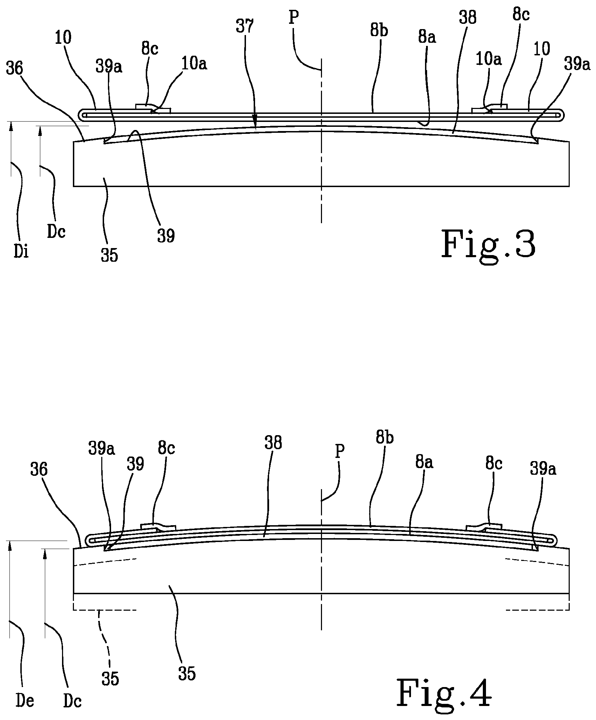

As is better visible in figures 2 to 5, the service drum 31 comprises a plurality sectors 35 circumferentially distributed around a central geometric axis X1, and is equipped with actuator devices, not described in detail since attainable in any convenient manner, not relevant for the purposes of the invention, which allow a selective and preferably simultaneous movement of the sectors themselves between a radially contracted condition (figure 3) in which they are approached to the central geometric axis X1, and a radially expanded condition (figure 4) in which the sectors 35 are radially moved away from the central geometric axis X1. In the radially contracted condition, the sectors 35 define an external diameter Dc of the service drum 31 having size smaller than that of the internal diameter Di of the belt structure 8 as previously formed on the auxiliary drum 22.

Upon command of the robotic arm 32, the service drum 31 in the radially contracted condition is adapted to be translated along a central geometric axis X1 thereof, in order to be coaxially inserted in the first transfer member 34a carrying the belt structure 8.

The belt layers 8a, 8b previously removed from the auxiliary drum 22 are thus transferred coaxially around the service drum 31, and engaged by this following a subsequent radial movement of the sectors 35 towards the radially expanded condition.

Each sector 35 of the service drum 31 has a radially outer surface 36 having a curved profile in a radial plane with respect to the central geometric axis X1. Consequently, when they are radially moved away from the contracted condition, the sectors 35 come into contact with the radially inner surface of the belt layers 8a, 8b initially at an axial middle line plane P.

The external diameter De defined by the sectors 35 in the radially expanded condition has size greater than that of the internal diameter Di of the belt structure 8 as previously formed on the auxiliary drum 22. With the progression of the movement of the sectors 35 towards the radially expanded condition, the belt layers 8a, 8b are therefore radially expanded and shaped according to a curved cross section profile, in accordance with the radially outer surface 36 of the sectors 35.

In this circumstance, the belt layers 8a, 8b are subjected to an increase of circumferential extension, with maximum size in proximity to the axial middle line plane P and progressively decreasing in the direction of the axial edges. The increase of circumferential extension of the belt layers 8a, 8b is facilitated by a variation of the tilt angle of the cords that constitute them, which tends to be reduced with respect to the circumferential extension direction, and to a simultaneous contraction of the size of axial extension of the belt layers themselves.

These adjustments produce relative movements between the radially inner surface of the belt layers 8a, 8b and the radially outer surfaces 36 of the sectors 35.

Between the sectors 35 and the radially inner surface of the belt layers 8a, 8b, at least one sliding interface generating insert 37 is interposed which, during the expansion of the sectors 35, is moved with respect to the sectors themselves and against the radially inner surface of the belt layers 8a, 8b so as to facilitate the above-described relative sliding, eliminating or significantly reducing the friction.

In a preferred embodiment represented in figures 2 to 4, the sliding interface generating insert 37 comprises at least one elastic sleeve 38 arranged around the sectors 35 of the service drum 31.

The elastic sleeve 38 is preferably mounted in elastic dilation condition around the sectors 35, at least when the latter are in expanded condition. When the sectors 35 are in the contracted condition, the elastic sleeve 38 can in any case preserve a desired degree of tensioning in the circumferential direction, so as to maintain a constant contact against the radially outer surfaces of the sectors 35. The translation of the sectors 35 in the radially expanded condition causes a circumferential dilation of the elastic sleeve 38. Corresponding with this circumferential dilation, there can be a reduction of the axial size of the elastic sleeve 38, and/or of the radially detectable thickness thereof with respect to the central geometric axis X1.

The elastic sleeve 38 can be conveniently made of elastomeric material. For example such elastomeric material can have polychloroprene base (polymer form of chloroprene commercialised with the name "neoprene" by the company "Du Pont Performance Elastomers"), in order to achieve a satisfactory size stability, repeatability in the deformations induced in response to the stresses, and structural integrity over time.

At least the outer and/or inner surfaces of the elastic sleeve 38 can be coated with an antifriction layer, in order to improve the slidability with respect to the radially inner surface at the belt layers and/or at the outer surface of the sectors 35, for example by coating with "Milliken" (code: "2700/070 31 + solvent" of the company Milliken Europe B.V.B.A.).

In order to improve the slidability, it can be provided that the radially outer surfaces 36 of the sectors 35 at least partially have an antifriction treatment, for example by "PlasmaCoat 25301/2008F" of the company Impreglon Italia S.r.l.).

Preferably, the elastic sleeve 38 is axially contained in a centring recess 39, define on each of said sectors 35 by two axial shoulders 39a directed towards axially outer edges of the elastic sleeve 38. The axial shoulders 39a can conveniently have a radial extension corresponding with the thickness of the elastic sleeve 38. The radial extension of the axial shoulders 39a corresponds with the depth of the centring recess 39. Alternatively, it can be provided that at least in the contracted condition, the radial extension of the axial shoulders 39a is smaller than the thickness of the elastic sleeve 38, so as to correspond with said thickness when the sectors 35 are in the radially expanded condition.

It can be conveniently provided that the axial extension of the elastic sleeve 38 be smaller than the axial extension detectable on the belt layers 8a, 8b, at least at their radially inner surface. Consequently in the contracted condition, as during the movement of the sectors 35 towards the radially expanded condition, the axially opposite ends of the belt layers 8a, 8b act directly in abutment against the outer surfaces of the sectors 35. It is thus possible to transmit high expansion forces to the belt layers 8a, 8b without risking subjecting the elastic sleeve 38 to excessive stresses at the opposite ends of the belt layers themselves.

Alternatively, where it is preferable to have a greater continuity on the abutment surfaces of the belt layers 8a, 8b, the elastic sleeve 38 can have an axial extension greater than or equal to an axial extension of the radially inner surface of the belt layers themselves. In other words, the belt layers 8a, 8b have the entire width of their radially inner surface in abutment against the elastic sleeve 38, to the benefit of the surface continuity.

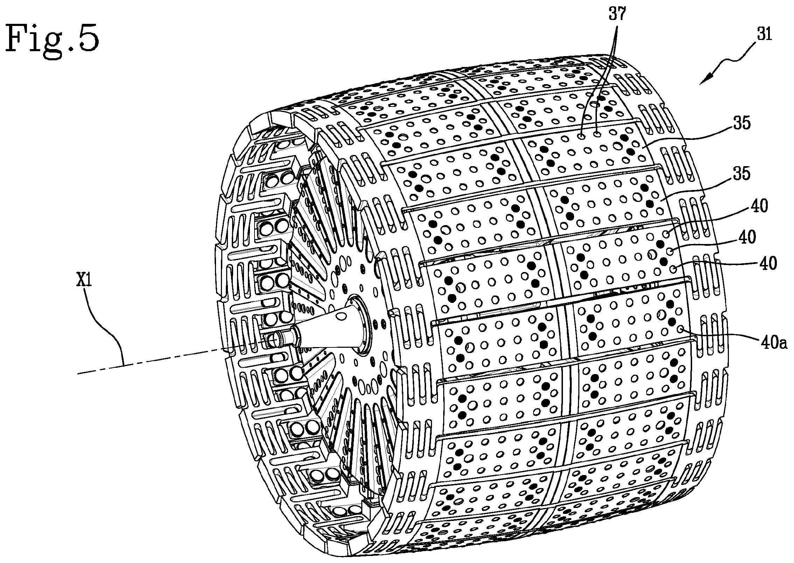

In further preferred embodiment solutions exemplified in figures 5 to 7, it is provided that the sliding interface generating insert 37 comprise a plurality of rolling bodies 40, 41 rotatably engaged with each sector 35 and projecting from the radially outer surface 36 thereof. During the expansion of the sectors 35, the rolling bodies 40, 41 come into contact with the radially inner surface of the belt layers 8a, 8b and are adapted to be driven in rotation so as to facilitate the relative sliding between the belt layers themselves and the sectors.

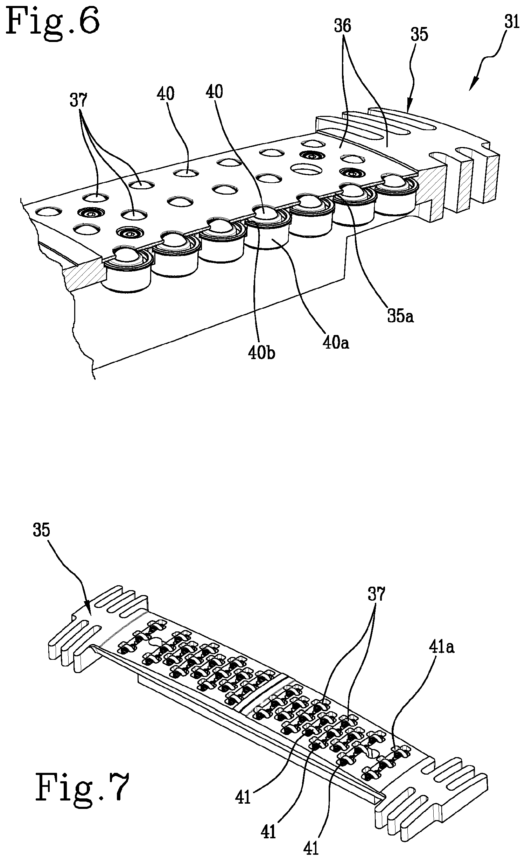

In the example of figures 5 and 6, the rolling bodies comprise spheres 40, distributed on the radially outer surface 36 of each sector 35 at a mutual distance preferably comprised between about 6 mm and about 60 mm, for example of about 25 mm. Preferably each sphere 40, having approximately diameter comprised between about 5 mm and about 20 mm, e.g. about 12 mm, is rotatably housed in a respective bushing 40a in turn housed in a slot 40b arranged in the sector 35. One or more closure plates 35a fixed to each sector 25 retain the bushings 40a, and hence the spheres 40, within the respective slots 40b. The closure plates 40 at least partially define the radially outer surface 36 of the sector 35. Through the closure plate 35a, each sphere 40 projects from the outer surface 36 according to a size smaller than the diameter thereof, approximately comprised between about 0.5 mm and about 3.5 mm, e.g. about 1 mm. Each sphere 40 is free to rotate around the centre thereof according to any axis passing through the centre itself, but it cannot undertake a spontaneous disengagement of the spheres 40 from the respective slots 40a.

In the example of figure 7, the rolling bodies comprise rollers 41, distributed on the radially outer surface 36 of each sector 35 at a mutual distance preferably comprised between about 6 mm and about 60 mm, for example about 19 mm. Preferably each roller 41, having approximately a diameter comprised between about 5 mm and about 25 mm, e.g. about 16 mm, is rotatably engaged in a respective housing 41a made in the radially outer surface 36 of the sector 35, and projects from the latter according to a size smaller than the diameter thereof. Each roller 41 is engaged in the respective housing 41a rotatably around a rotation axis thereof, preferably parallel to a circumferential extension direction of the service drum 31 and of the belt structure 8 arranged thereon, so as to facilitate the relative sliding between the belt layers 8a, 8b and the sectors 35 of the drum itself in the axial direction.

When the sectors 35 have reached the expanded condition, the aforesaid radially movable elements of the first transfer member 34a are radially moved away from the belt structure 8, which remains engaged with the service drum 31.

Through the robotic arm 32, the service drum 31 can therefore be axially translated in order to be removed from the first transfer member 34a together with the shaped belt structure 8.

The robotic arm 32, for example of the type with six or more rotation axes, is able to sustain, actuate in rotation and suitably move the service drum 31 in the second work area 21 for the purpose of attaining the tread band 9 and, if necessary, of at least a second part of the belt structure 8.

Such second part of the belt structure 8 can for example comprise the aforesaid additional enclosing layer 11, possibly applicable in addition to or in substitution of the belt-like reinforcement inserts 8c by winding devices 42 operating in a third work station 43, preferably installed in the second work area 21.

Once the formation of the possible additional enclosing layer 11 has been completed, the robotic arm 32 carries the service drum 31 at at least one fourth work station 44 where devices 45 set for the formation of the tread band 9 operate, preferably by deposition of a continuous elongated element made of elastomeric material according to side-by-side and/or radially superimposed coils.

Once the making of the tread band 9 has been completed, the service drum 31 can be carried, with the aid of the robotic arm 32, in engagement relationship with a second transfer station 16 where, in a manner that is not described since it is not relevant for the purposes of the invention, the coupling of the crown structure 7 to the carcass structure 2a is executed.

After the execution of possible additional processing, aimed for example to improve the adhesion of the crown structure 7 to the carcass structure 2a, and/or to the application of the sidewalls 12 on the laterally opposite surfaces of the tyre 2 being processed, the built tyre 2 can be removed from the primary drum 17 in order to be subjected to a process of final vulcanisation and/or other processing provided for in the production cycle.

## Claims

1. Process for building tyres for vehicles, comprising;
manufacturing a carcass structure (2a) comprising at least one carcass ply (3) having terminal flaps (3a) engaged with respective anchoring annular structures (5);
manufacturing a crown structure (7);
coupling the crown structure (7) in radially outer position to the carcass structure (2a);
wherein manufacturing the crown structure (7) comprises:
arranging one or more belt layers (8a, 8b) in sequence around an auxiliary drum (22);
arranging a service drum (31) comprising sectors (35) circumferentially distributed around a central geometric axis (X1) and radially movable between a radially contracted condition in which they are approached to the central geometric axis (X1) and a radially expanded condition in which the sectors (35) are moved away from the central geometric axis (X1), wherein each sector (35) has a radially outer surface (36) having a curved profile in a radial plane with respect to the central geometric axis (X1);
removing the belt layers (8a, 8b) from the auxiliary drum (22) and transferring them coaxially around the service drum (31) arranged in the contracted condition;
expanding the sectors (35) of the service drum (31) from the contracted condition to the expanded condition, in order to shape said belt layers (8a, 8b) according to a curved cross section profile, in accordance with the radially outer surfaces of the sectors (35);
**characterised in that**;
between the sectors (35) and a radially inner surface of the belt layers (8a, 8b), at least one sliding interface generating insert (37) is interposed, which, during the expansion of the sectors (35), moves with respect to the sectors (35) and against said radially inner surface in order to facilitate a circumferential sliding of the belt layers (8a, 8b) with respect to the sectors (35).

2. Process according to claim 1, wherein forming the crown structure (7) comprises:
applying a first belt layer (8a) around an outer surface of the auxiliary drum (22);
applying, around the first belt layer (8a), a second belt layer (8b) having width smaller than that of the first belt layer (8a);
turning up terminal flaps (10) of the first belt layer (8a), around respective terminal edges of the second belt layer (8b) and superimposed on the latter,
wherein the turning up of said terminal flaps (10) is executed before transferring the belt layers (8a, 8b) on the service drum (31).

3. Process according to one or more of the preceding claims, wherein the movement of the sectors (35) towards the radially expanded condition determines a circumferential dilation of an elastic sleeve (38), constituting said sliding interface generating insert (37).

4. Process according to one or more of the preceding claims, wherein the movement of the sectors (35) towards the radially expanded condition determines a rolling of rolling bodies (40, 41), constituting said sliding interface generating insert (37).

5. Service drum for manufacturing tyres of vehicles, comprising:
a plurality of sectors (35) circumferentially distributed around a central geometric axis (X1) and radially movable between a radially contracted condition in which they are approached to the central geometric axis (X1) and a radially expanded condition in which the sectors (35) are moved away from the central geometric axis (X1),
wherein each sector (35) has a radially outer surface (36) having a curved profile in a radial plane with respect to the central geometric axis (X1);
**characterised in that**;
the service drum (31) also comprises at least one sliding interface generating insert (37), movable with respect to the radially outer surface (36) of the sectors (35) and configured for operating in contact relationship against a radially inner surface of one or more belt layers (8a, 8b) applicable around said service drum (31), in order to support a circumferential sliding of the belt layers (8a, 8b) with respect to the sectors (35).

6. Service drum according to claim 5, wherein the sliding interface generating insert (37) comprises an elastic sleeve (38) arranged around the sectors (35).

7. Service drum according to claim 6, wherein the elastic sleeve (38) is axially contained in a centring recess (39) made on each of said sectors (35).

8. Service drum according to claim 7, wherein the centring recess (39) has two axial shoulders (39a) directed towards axially outer edges of the elastic sleeve (38), said axial shoulders (39a) having height not greater than a thickness of the elastic sleeve (38).

9. Service drum according to claim 5, wherein the sliding interface generating insert (37) comprises a plurality of rolling bodies (40, 41) rotatably engaged with each sector (35) and projecting from the radially outer surface (36) thereof.

10. Service drum according to claim 9, wherein the rolling bodies (40, 41) comprise spheres (40).

11. Service drum according to claim 10, wherein each of said spheres (40) projects from the radially outer surface (36) of the respective sector (35) according to a size smaller than the diameter thereof, and is free to rotate around the centre thereof according to any axis passing through the centre itself.

12. Service drum according to claim 9, wherein the rolling bodies (40, 41) comprise rollers (41).

13. Service drum according to claim 12, wherein each of said rollers (41) is rotatable around a rotation axis substantially parallel to a circumferential extension direction of the service drum (31).

14. Plant for manufacturing tyres of vehicles, comprising:
a carcass building area (13) for manufacturing carcass structures (2a);
a crown building area (14) for manufacturing crown structures (7);
an assembly station (15) in which each carcass structure (2a) is associated with one of said crown structures (7);
wherein the crown building area (14) comprises:
an auxiliary drum (22);
at least one feed group (30) configured for arranging one or more belt layers (8a, 8b) in sequence around the auxiliary drum (22);
a service drum (31) according to one or more of the claims from 5 to 13;
a transfer device (34) configured for removing the belt layers (8a, 8b) from the auxiliary drum (22) and transferring them coaxially around the service drum (31) arranged in the contracted condition.

15. Plant according to claim 14, also comprising turning up devices (29) for turning up terminal flaps (10) of a first belt layer (8a), around respective lateral edges of the second belt layer (8b) and superimposed on the latter.

## Patentansprüche

1. Prozess zur Fertigung von Reifen für Fahrzeuge, umfassend:
Herstellen einer Karkassenstruktur (2a), die mindestens eine Karkassenlage (3) umfasst, die Endklappen (3a) aufweist, die mit jeweiligen ringförmigen Verankerungsstrukturen (5) in Eingriff stehen;
Herstellen einer Kronenstruktur (7);
Koppeln der Kronenstruktur (7) in einer radial äußeren Position mit der Karkassenstruktur (2a);
wobei Herstellen der Kronenstruktur (7) umfasst:
Anordnen einer oder mehrerer Gürtelschichten (8a, 8b) der Reihe nach um eine Hilfstrommel (22) herum;
Anordnen einer Wartungstrommel (31), die Sektoren (35) umfasst, die in Umfangsrichtung um eine zentrale geometrische Achse (X1) verteilt und radial zwischen einem radial zusammengezogenen Zustand, in dem sie der zentralen geometrischen Achse (X1) angenähert werden, und einem radial ausgedehnten Zustand, in dem die Sektoren (35) von der zentralen geometrischen Achse (X1) wegbewegt werden, beweglich sind, wobei jeder Sektor (35) eine radial äußere Oberfläche (36) aufweist, die in einer radialen Ebene in Bezug auf die zentrale geometrische Achse (X1) ein gekrümmtes Profil aufweist;
Entfernen der Gürtelschichten (8a, 8b) von der Hilfstrommel (22) und koaxiales Transferieren dieser um die Wartungstrommel (31) herum, die in dem zusammengezogenen Zustand angeordnet ist;
Ausdehnen der Sektoren (35) der Wartungstrommel (31) aus dem zusammengezogenen Zustand in den ausgedehnten Zustand, um die Gürtelschichten (8a, 8b) gemäß einem gekrümmten Querschnittsprofil zu formen, in Übereinstimmung mit den radial äußeren Oberflächen der Sektoren (35);
**dadurch gekennzeichnet, dass**;
zwischen den Sektoren (35) und einer radial inneren Oberfläche der Gürtelschichten (8a, 8b) mindestens ein eine Gleitfläche erzeugender Einsatz (37) eingefügt ist, der sich während der Ausdehnung der Sektoren (35) in Bezug auf die Sektoren (35) und entgegen der radial inneren Oberfläche bewegt, um ein Gleiten der Gürtelschichten (8a, 8b) in Umfangsrichtung in Bezug auf die Sektoren (35) zu erleichtern.

2. Prozess nach Anspruch 1, wobei Bilden der Kronenstruktur (7) umfasst:
Aufbringen einer ersten Gürtelschicht (8a) um eine äußere Oberfläche der Hilfstrommel (22) herum;
Aufbringen einer zweiten Gürtelschicht (8b), die eine kleinere Breite als die der ersten Gürtelschicht (8a) aufweist, um die erste Gürtelschicht (8a) herum;
Hochklappen der Endklappen (10) der ersten Gürtelschicht (8a) um jeweilige Endkanten der zweiten Gürtelschicht (8b) herum und über der letzteren gelagert,
wobei das Hochklappen der Endklappen (10) vor Transferieren der Gürtelschichten (8a, 8b) auf der Wartungstrommel (31) ausgeführt wird.

3. Prozess nach einem oder mehreren der vorstehenden Ansprüche, wobei die Bewegung der Sektoren (35) in Richtung des radial ausgedehnten Zustands eine Umfangsdehnung einer elastischen Hülse (38) bestimmt, die den eine Gleitfläche erzeugenden Einsatz (37) bildet.

4. Prozess nach einem oder mehreren der vorstehenden Ansprüche, wobei die Bewegung der Sektoren (35) in Richtung des radial ausgedehnten Zustands ein Rollen von Rollkörpern (40, 41) bestimmt, die den eine Gleitfläche erzeugenden Einsatz (37) bilden.

5. Wartungstrommel zum Herstellen von Reifen von Fahrzeugen, umfassend:
eine Vielzahl von Sektoren (35), die in Umfangsrichtung um eine zentrale geometrische Achse (X1) herum verteilt sind und radial zwischen einem radial zusammengezogenen Zustand, in dem sie der zentralen geometrischen Achse (X1) angenähert werden, und einem radial ausgedehnten Zustand, in dem die Sektoren (35) von der zentralen geometrischen Achse (X1) weg bewegt werden, beweglich sind,
wobei jeder Sektor (35) eine radial äußere Oberfläche (36) aufweist, die ein gekrümmtes Profil in einer radialen Ebene in Bezug auf die zentrale geometrische Achse (X1) aufweist;
**dadurch gekennzeichnet, dass**;
die Wartungstrommel (31) auch mindestens einen eine Gleitfläche erzeugenden Einsatz (37) umfasst, der in Bezug auf die radial äußere Oberfläche (36) der Sektoren (35) beweglich und dazu konfiguriert ist, in Kontaktbeziehung gegen eine radial innere Oberfläche von einer oder mehreren Gürtelschichten (8a, 8b) zu wirken, die um die Wartungstrommel (31) aufgebracht werden können, um ein Gleiten der Gürtelschichten (8a, 8b) in Umfangsrichtung in Bezug auf die Sektoren (35) zu unterstützen.

6. Wartungstrommel nach Anspruch 5, wobei der eine Gleitfläche erzeugende Einsatz (37) eine elastische Hülse (38) umfasst, die um die Sektoren (35) herum angeordnet ist.

7. Wartungstrommel nach Anspruch 6, wobei die elastische Hülse (38) axial in einer Zentrieraussparung (39) enthalten ist, die auf jedem der Sektoren (35) hergestellt ist.

8. Wartungstrommel nach Anspruch 7, wobei die Zentrieraussparung (39) zwei axiale Schultern (39a) aufweist, die in Richtung axial äußerer Kanten der elastischen Hülse (38) gerichtet sind, wobei die axialen Schultern (39a) eine Höhe aufweisen, die nicht größer als eine Dicke der elastischen Hülse (38) ist.

9. Wartungstrommel nach Anspruch 5, wobei der eine Gleitfläche erzeugende Einsatz (37) eine Vielzahl von Rollkörpern (40, 41) umfasst, die drehbar mit jedem Sektor (35) in Eingriff stehen und von der radial äußeren Oberfläche (36) davon vorstehen.

10. Wartungstrommel nach Anspruch 9, wobei die Rollkörper (40, 41) Kugeln (40) umfassen.

11. Wartungstrommel nach Anspruch 10, wobei jede der Kugeln (40) von der radial äußeren Oberfläche (36) des jeweiligen Sektors (35) gemäß einer Größe, die kleiner als der Durchmesser davon ist, vorsteht und frei ist, um den Mittelpunkt davon gemäß einer beliebigen Achse zu drehen, die durch den Mittelpunkt selbst verläuft.

12. Wartungstrommel nach Anspruch 9, wobei die Rollkörper (40, 41) Rollen (41) umfassen.

13. Wartungstrommel nach Anspruch 12, wobei jede der Rollen (41) um eine Drehachse drehbar ist, die im Wesentlichen parallel zu einer Umfangserstreckungsrichtung der Wartungstrommel (31) ist.

14. Anlage zum Herstellen von Reifen von Fahrzeugen, umfassend:
einen Karkassenfertigungsbereich (13) zum Herstellen von Karkassenstrukturen (2a);
einen Kronenfertigungsbereich (14) zum Herstellen von Kronenstrukturen (7);
eine Montagestation (15), in der jede Karkassenstruktur (2a) einer der Kronenstrukturen (7) zugeordnet ist;
wobei der Kronenfertigungsbereich (14) umfasst:
eine Hilfstrommel (22);
mindestens eine Zuführgruppe (30), die zum Anordnen einer oder mehrerer Gürtelschichten (8a, 8b) der Reihe nach um die Hilfstrommel (22) herum konfiguriert ist;
eine Wartungstrommel (31) nach einem oder mehreren der Ansprüche 5 bis 13;
eine Transfervorrichtung (34), die zum Entfernen der Gürtelschichten (8a, 8b) von der Hilfstrommel (22) und koaxialen Transferieren dieser um die Wartungstrommel (31) herum, die in dem zusammengezogenen Zustand angeordnet ist, konfiguriert ist.

15. Anlage nach Anspruch 14, auch umfassend Hochklappvorrichtungen (29) zum Hochklappen von Endklappen (10) einer ersten Gürtelschicht (8a) um jeweilige Seitenkanten der zweiten Gürtelschicht (8b) herum und über der letzteren gelagert.

## Revendications

1. Processus de fabrication de pneus pour véhicules, comprenant :
la fabrication d'une structure de carcasse (2a) comprenant au moins une nappe de carcasse (3) présentant des rabats terminaux (3a) engagés avec des structures annulaires d'ancrage respectives (5) ;
la fabrication d'une structure de sommet (7) ;
le couplage de la structure de sommet (7) en position radialement extérieure à la structure de carcasse (2a) ;
dans lequel la fabrication de la structure de sommet (7) comprend :
la disposition d'une ou plusieurs couches de ceinture (8a, 8b) en séquence autour d'un tambour auxiliaire (22) ;
la disposition d'un tambour de service (31) comprenant des secteurs (35) répartis circonférentiellement autour d'un axe géométrique central (X1) et mobiles radialement entre un état radialement contracté dans lequel ils sont rapprochés de l'axe géométrique central (X1) et un état radialement expansé dans lequel les secteurs (35) sont éloignés de l'axe géométrique central (X1), dans lequel chaque secteur (35) présente une surface radialement extérieure (36) présentant un profil incurvé dans un plan radial par rapport à l'axe géométrique central (X1) ;
le retrait des couches de ceinture (8a, 8b) du tambour auxiliaire (22) et leur transfert coaxial autour du tambour de service (31) disposé dans l'état contracté ;
l'expansion des secteurs (35) du tambour de service (31) de l'état contracté à l'état expansé, afin de façonner lesdites couches de ceinture (8a, 8b) selon un profil de section transversale incurvé, en accord avec les surfaces radialement extérieures des secteurs (35) ;
**caractérisé en ce que** ;
entre les secteurs (35) et une surface radialement intérieure des couches de ceinture (8a, 8b), est interposé au moins un insert générateur d'interface coulissante (37), qui, lors de l'expansion des secteurs (35), se déplace par rapport aux secteurs (35) et contre ladite surface radialement intérieure afin de faciliter un glissement circonférentiel des couches de ceinture (8a, 8b) par rapport aux secteurs (35).

2. Processus selon la revendication 1, dans lequel la formation de la structure de sommet (7) comprend :
l'application d'une première couche de ceinture (8a) autour d'une surface extérieure du tambour auxiliaire (22) ;
l'application, autour de la première couche de ceinture (8a), d'une seconde couche de ceinture (8b) présentant une largeur inférieure à celle de la première couche de ceinture (8a) ;
le retournement des rabats terminaux (10) de la première couche de ceinture (8a), autour des bords terminaux respectifs de la seconde couche de ceinture (8b) et superposés à cette dernière,
dans lequel le retournement desdits rabats terminaux (10) est exécuté avant le transfert des couches de ceinture (8a, 8b) sur le tambour de service (31).

3. Processus selon une ou plusieurs des revendications précédentes, dans lequel le mouvement des secteurs (35) vers l'état radialement expansé détermine une dilatation circonférentielle d'un manchon élastique (38), constituant ledit insert générateur d'interface coulissante (37).

4. Processus selon une ou plusieurs des revendications précédentes, dans lequel le mouvement des secteurs (35) vers l'état radialement expansé détermine un roulement de corps roulants (40, 41), constituant ledit insert générateur d'interface coulissante (37).

5. Tambour de service pour la fabrication de pneus de véhicules, comprenant :
une pluralité de secteurs (35) répartis circonférentiellement autour d'un axe géométrique central (X1) et mobiles radialement entre un état radialement contracté dans lequel ils sont rapprochés de l'axe géométrique central (X1) et un état radialement expansé dans lequel les secteurs (35) sont éloignés de l'axe géométrique central (X1),
dans lequel chaque secteur (35) présente une surface radialement extérieure (36) présentant un profil incurvé dans un plan radial par rapport à l'axe géométrique central (X1) ;
**caractérisé en ce que** ;
le tambour de service (31) comprend également au moins un insert générateur d'interface coulissante (37), mobile par rapport à la surface radialement extérieure (36) des secteurs (35) et configuré pour fonctionner en relation de contact contre une surface radialement intérieure d'une ou plusieurs couches de ceinture (8a, 8b) applicables autour dudit tambour de service (31), afin de supporter un glissement circonférentiel des couches de ceinture (8a, 8b) par rapport aux secteurs (35).

6. Tambour de service selon la revendication 5, dans lequel l'insert générateur d'interface coulissante (37) comprend un manchon élastique (38) disposé autour des secteurs (35).

7. Tambour de service selon la revendication 6, dans lequel le manchon élastique (38) est contenu axialement dans un évidement de centrage (39) réalisé sur chacun desdits secteurs (35).

8. Tambour de service selon la revendication 7, dans lequel l'évidement de centrage (39) présente deux épaulements axiaux (39a) dirigés vers les bords axialement extérieurs du manchon élastique (38), lesdits épaulements axiaux (39a) présentant une hauteur non supérieure à une épaisseur du manchon élastique (38).

9. Tambour de service selon la revendication 5, dans lequel l'insert générateur d'interface coulissante (37) comprend une pluralité de corps roulants (40, 41) engagés de manière rotative avec chaque secteur (35) et faisant saillie à partir de la surface radialement extérieure (36) de celui-ci.

10. Tambour de service selon la revendication 9, dans lequel les corps roulants (40, 41) comprennent des billes (40).

11. Tambour de service selon la revendication 10, dans lequel chacune desdites billes (40) fait saillie à partir de la surface radialement extérieure (36) du secteur respectif (35) selon une taille inférieure à son diamètre, et est libre de tourner autour de son centre selon tout axe passant par le centre lui-même.

12. Tambour de service selon la revendication 9, dans lequel les corps roulants (40, 41) comprennent des rouleaux (41).

13. Tambour de service selon la revendication 12, dans lequel chacun desdits rouleaux (41) peut tourner autour d'un axe de rotation sensiblement parallèle à une direction d'extension circonférentielle du tambour de service (31).

14. Installation de fabrication de pneus de véhicules, comprenant :
une zone de construction de carcasse (13) pour la fabrication de structures de carcasse (2a) ;
une zone de construction de sommet (14) pour la fabrication de structures de sommet (7) ;
un poste d'assemblage (15) dans lequel chaque structure de carcasse (2a) est associée à l'une desdites structures de sommet (7) ;
dans laquelle la zone de construction de sommet (14) comprend :
un tambour auxiliaire (22) ;
au moins un groupe d'alimentation (30) configuré pour disposer une ou plusieurs couches de ceinture (8a, 8b) en séquence autour du tambour auxiliaire (22) ;
un tambour de service (31) selon une ou plusieurs des revendications 5 à 13 ;
un dispositif de transfert (34) configuré pour retirer les couches de ceinture (8a, 8b) du tambour auxiliaire (22) et les transférer coaxialement autour du tambour de service (31) disposé dans l'état contracté.

15. Installation selon la revendication 14, comprenant en outre des dispositifs de retournement (29) pour retourner des rabats terminaux (10) d'une première couche de ceinture (8a), autour des bords latéraux respectifs de la seconde couche de ceinture (8b) et superposés à cette dernière.
